# EUROPÄISCHE PATENTSCHRIFT

(11) **EP 0 898 641 B1**
(45) Veröffentlichungstag und Bekanntmachung des Hinweises auf die Patenterteilung: **26.06.2002**
(21) Anmeldenummer: 97923772.4
(22) Anmeldetag: 30.04.1997
(51) Int. Cl.: F01K 23/10

(54) **GAS- UND DAMPFTURBINENANLAGE SOWIE VERFAHREN ZU DEREN BETRIEB**
GAS AND STEAM TURBINE PLANT AND METHOD OF OPERATING THE SAME
INSTALLATION A TURBINE A GAZ ET A TURBINE A VAPEUR ET PROCEDE PERMETTANT DE LA FAIRE FONCTIONNER

(30) Priorität: 14.05.1996 DE 19619470
(43) Veröffentlichungstag der Anmeldung: 03.03.1999
(73) Patentinhaber: SIEMENS AKTIENGESELLSCHAFT, 80333 München (DE)
(72) Erfinder: BRÜCKNER, Hermann, D-91080 Uttenreuth (DE); SCHMID, Erich, D-91080 Marloffstein (DE)
(86) Internationale Anmeldenummer: DE9700887
(87) Internationale Veröffentlichungsnummer: WO9743523

(56) Entgegenhaltungen:
- EP-A- 0 523 467
- DE-C- 820 600
- GB-A- 957 024

## Beschreibung

Die Erfindung bezieht sich auf eine Gas- und Dampfturbinenanlage mit einem der Gasturbine abgasseitig nachgeschalteten Abhitzedampferzeuger, dessen Heizflächen in den Wasser-Dampf-Kreislauf der Dampfturbine geschaltet sind, die einen Hochdruckteil und einen Mitteldruckteil sowie einen Niederdruckteil aufweist. Sie richtet sich weiter auf eine nach diesem Verfahren betriebene Anlage.

Bei einer Gas- und Dampfturbinenanlage wird die im entspannten Arbeitsmittel aus der Gasturbine enthaltene Wärme zur Erzeugung von Dampf für die Dampfturbine genutzt. Die Wärmeübertragung erfolgt mittels einer Anzahl von Heizflächen, die in Form von Rohren oder Rohrbündeln in einem der Gasturbine abgasseitig nachgeschalteten Abhitzedampferzeuger angeordnet sind. Diese wiederum sind in den Wasser-Dampf-Kreislauf der Dampfturbine geschaltet. Der Wasser-Dampf-Kreislauf umfaßt mehrere, z.B. zwei oder drei, Druckstufen, wobei jede Druckstufe als Heizflächen einen Vorwärmer und einen Verdampfer sowie einen Überhitzer aufweist.

Um bei der Wärmeübertragung einen möglichst hohen Wirkungsgrad der Anlage zu erzielen, ist die Anordnung der Heizflächen innerhalb des Abhitzedampferzeugers an den Temperaturverlauf des Abgases der Gasturbine angepaßt. Bei einem Dreidruck-Prozeß mit Zwischenüberhitzung, dem sogenannten Dreidruck-ZÜ-Prozeß, wird dabei bei vorgegebener Gasturbinenleistung eine besonders hohe Dampfturbinenleistung und damit ein besonders hoher Gesamtwirkungsgrad der Anlage erreicht. Eine nach dem Dreidruck-ZÜ-Prozeß arbeitende Gas- und Dampfturbinenanlage ist aus der EP 0 436 536 B1 und auch aus der DE 44 34 526 C1 bekannt. Aber auch bei diesen bekannten Anlagen ist der Gesamtwirkungsgrad jeweils auf etwa 55 % begrenzt.

In der EP-A-0 523 467 ist eine Gas- und Dampfturbinenanlage beschrieben, bei der das in der Gasturbine entspannte Arbeitsmittel zur Erzeugung von Dampf für die Dampfturbine genutzt wird. Hierbei wird bei Verwendung von Kohlegas als Brennstoff für die Gasturbine dem Wasser-Dampf-Kreislauf der Dampfturbine eine Teilmenge des vorgewärmten und unter Druck stehenden Wassers entnommen und zur Kühlung des Kohlegases verwendet. Dem Wasser-Dampf-Kreislauf wird dabei im Kohlegasbetrieb in Strömungsrichtung hinter den Heizflächen des Economizers eine mit einem Ventil einstellbare Teilmenge des vorgewärmten und unter hohem Druck stehenden Wassers entnommen und über eine Abströmleitung dem Kohlevergasungsprozeß zugeführt. Die Teilmenge ist unter anderem abhängig von dem in der Kohlevergasungsanlage eingestellten Vergasertyp und beträgt bis zu 60 % der den Economizer durchströmenden Wassermenge. In der Kohlevergasungsanlage wird das vorgewärmte Wasser in einem Wärmetauscher durch indirekten Wärmetausch mit dem beim Kohlevergasungsprozeß erzeugten Rohgas oder Kohlegas verdampft, wobei gleichzeitig das Kohlegas abgekühlt wird. Der dabei gebildete Dampf strömt über eine Dampfleitung aus der Kohlevergasungsanlage in den Überhitzer der Hochdruckstufe der Gas- und Dampfturbinenanlage.

Der Erfindung liegt daher die Aufgabe zugrunde, eine Gas- und Dampfturbinenanlage sowie ein zu deren Betrieb geeignetes Verfahren derart weiterzubilden, daß durch eine weitere Steigerung der Nutzung des Wärmeinhalts im Abgas der Gasturbine eine Steigerung des Anlagenwirkungsgrades erzielt wird.

Bezüglich der Anlage wird diese Aufgabe gelöst durch einen außerhalb des Abhitzedampferzeugers angeordneten Wärmetauscher, der primärseitig zwischen den Hochdruckteil und den Mitteldruckteil und sekundärseitig zwischen den Mitteldruckteil und den Niederdruckteil der Dampfturbine geschaltet ist.

Die Erfindung geht dabei von der Überlegung aus, daß für eine Aufheizung oder Zwischenüberhitzung von dem Niederdruckteil der Dampfturbine zuströmendem Niederdruckdampf anstelle einer direkten eine indirekte Wärmeentnahme aus dem Rauchgas erfolgen kann, indem Abdampf aus der Dampfturbine mit geeigneter Temperatur verwendet wird. Als besonders geeignet hat sich dabei Mitteldruckdampf aus dem Hochdruckteil der Dampfturbine aufgrund der besonders günstigen Temperaturdifferenz zum Niederdruckdampf erwiesen.

Der bei dem indirekten Wärmetausch im Wärmetauscher abgekühlte Mitteldruckdampf wird vorzugsweise in zwei Stufen auf Nenntemperatur aufgeheizt. Daher ist der Wärmetauscher zweckmäßigerweise primärseitig über zwei dem Hochdruckteil der Dampfturbine nachgeschaltete und im Abhitzedampferzeuger in Strömungsrichtung des Abgases aus der Gasturbine hintereinander angeordnete Überhitzer-Heizflächen an den Eingang des Mitteldruckteils der Dampfturbine angeschlossen.

Im Abhitzedampferzeuger in einer Verdampfer-Heizfläche erzeugter Mitteldruckdampf wird vorzugsweise dem im Wärmetauscher abgekühlten Mitteldruckdampf zugemischt, bevor beide Dampfströme im Abhitzedampferzeuger überhitzt werden. Dazu ist vorteilhafterweise eine im Abhitzedampferzeuger angeordnete Verdampfer-Heizfläche ausgangsseitig mit dem primärseitigen Ausgang des Wärmetauscher verbunden.

Zweckmäßigerweise umfaßt jede Stufe des Wasser-Dampf-Kreislaufs eine Verdampfer-Heizfläche und mindestens eine Überhitzer-Heizfläche, wobei zweckmäßigerweise zusätzlich eine zwischen den Hochdruckteil und den Mitteldruckteil der Dampfturbine geschaltete Zwischenüberhitzer-Heizfläche vorgesehen ist.

Bezüglich des Verfahrens zum Betreiben einer Gas- und Dampfturbinenanlage, bei dem im entspannten Arbeitsmittel aus der Gasturbine enthaltene Wärme zur Erzeugung von Dampf für die in einen aus drei Druckstufen aufgebauten Wasser-Dampf-Kreislauf geschaltete Dampfturbine genutzt wird, wobei im Wasser-Dampf-Kreislauf strömende Speisewasser in im Abhitzedampferzeuger angeordneten Heizflächen verdampft und überhitzt wird, wird die genannte Aufgabe erfindungsgemäß dadurch gelöst, daß der dem Niederdruckteil der Dampfturbine zuströmender Niederdruckdampf durch indirekten Wärmetausch mit aus dem Hochdruckteil der Dampfturbine abströmendem Mitteldruckdampf aufgeheizt wird.

Die mit der Erfindung erzielten Vorteile bestehen insbesondere darin, daß durch Verwendung eines außerhalb des Abhitzedampferzeugers vorgesehenen Wärmetauschers zur Aufheizung von Niederdruckdampf durch indirekten Wärmetausch mit Mitteldruckdampf in besonders einfacher Weiser ohne zusätzliche Regeleinrichtungen eine besonders hohe Temperatur des Niederdruckdampfes erzielt wird. Dies führt zu einem besonders hohen Gesamtwirkungsgrad der Anlage. Dabei sind die Betriebsführung besonders vereinfacht und die Zuverlässigkeit der Gesamtanlage erhöht. Um besonders kurze Rohrleitungen und geringe Druckverluste zu ermöglichen, ist vorteilhafterweise der Wärmetauscher im Bereich der Dampfturbine, d. h. in deren Nähe, angeordnet.

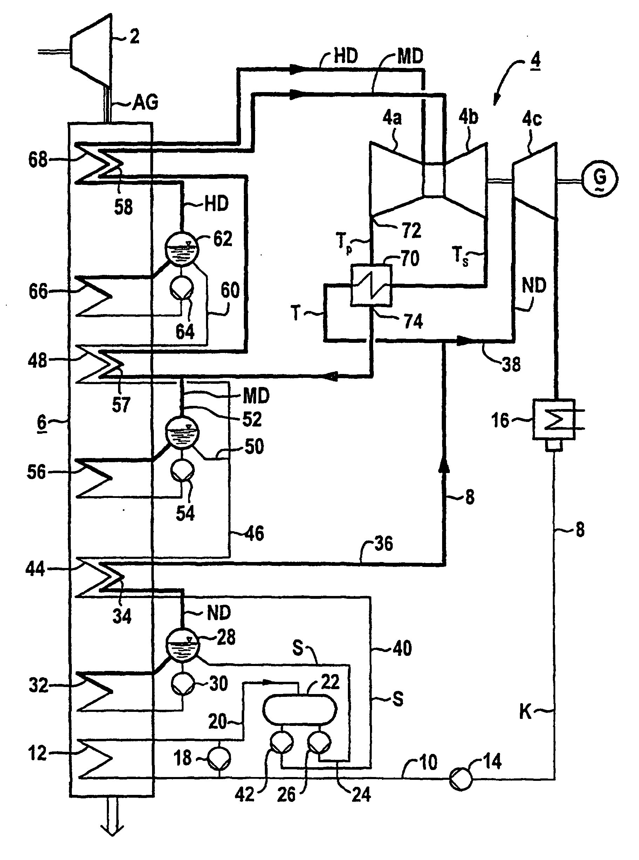

Ein Ausführungsbeispiel der Erfindung wird anhand einer Zeichnung näher erläutert. Darin zeigt die Figur schematisch eine Gas- und Dampfturbinenanlage mit einem separaten Wärmetauscher zur Aufheizung von Niederdruckdampf.

Die Gas- und Dampfturbinenanlage gemäß der Figur umfaßt eine Gasturbine 2 und eine Dampfturbine 4 sowie einen vom heißen Abgas AG aus der Gasturbine 2 durchströmten Abhitzedampferzeuger 6. Die Dampfturbine 4 umfaßt einen Hochdruckteil 4a und einen Mitteldruckteil 4b sowie einen Niederdruckteil 4c. Der Abhitzedampferzeuger 6 dient zur Dampferzeugung, wobei dessen Heizflächen in den Wasser-Dampf-Kreislauf 8 der Dampfturbine 4 geschaltet sind.

Dazu weist der Abhitzedampferzeuger 6 einen an eine Kondensatleitung 10 angeschlossenen Kondensatvorwärmer 12 auf, der eingangsseitig über eine Kondesatpumpe 14 mit einem der Dampfturbine 4 nachgeschalteten Kondensator 16 verbunden ist. Der Kondensatvorwärmer 12 ist ausgangsseitig über eine Umwälzpumpe 18 mit seinem Eingang verbunden. Er ist ausgangsseitig außerdem über eine Speisewasserleitung 20 mit einem Speisewasserbehälter 22 verbunden.

Der Speisewasserbehälter 22 ist ausgangsseitig über eine Speisewasserleitung 24, in die eine Pumpe 26 geschaltet ist, mit einer Niederdruck-Trommel 28 verbunden. An die Niederdruck-Trommel 28 ist über eine Umwälzpumpe 30 eine Verdampfer-Heizfläche 32 angeschlossen. Die Niederdruck-Trommel 28 ist dampfseitig mit einer Überhitzer-Heizfläche 34 verbunden, die über eine Dampfleitung 36 an eine Überströmleitung 38 vom Mitteldruckteil 4b zum Niederdruckteil 4c der Dampfturbine 4 angeschlossen ist. Die Niederdruck-Trommel 28 und die Verdampfer-Heizfläche 32 bilden zusammen mit der Überhitzer-Heizfläche 34 und dem Niederdruckteil 4c eine Niederdruckstufe des Wasser-Dampf-Kreislauf 8.

Der Speisewasserbehälter 22 ist ausgangsseitig außerdem über eine Speisewasserleitung 40, in die eine Pumpe 42 geschaltet ist, mit einem ersten Hochdruckvorwärmer oder Economiser 44 verbunden, der über eine Verbindungsleitung 46 mit dem Eingang eines zweiten Hochdruckvorwärmers oder Economisers 48 verbunden ist. Die Pumpe 42 und damit die Speisewasserleitung 40 kann auch in nicht näher dargestellter Art und Weise auf der Druckseite der Pumpe 26 an die Speisewasserleitung 24 angeschlossen sein. Auch kann ein weiterer Economiser als Mitteldruckvorwärmer vorgesehen sein, der dann in nicht näher dargestellter Art und Weise zweckmäßigerweise innerhalb des Abhitzedampferzeugers 6 im Bereich des ersten Hochdruckvorwärmers 44 angeordnet ist.

An die Verbindungsleitung 46 ist über eine Leitung 50 eine Mitteldruck-Trommel 52 angeschlossen, an die wiederum über eine Umwälzpumpe 54 eine Verdampfer-Heizfläche 56 angeschlossen ist. Die Mitteldruck-Trommel 52 ist dampfseitig mit einer ersten Zwischenüberhitzer-Heizfläche 57 verbunden, die ausgangsseitig mit einer zweiten Zwischenüberhitzer-Heizfläche 58 verbunden ist. Die Zwischenüberhitzer-Heizfläche 58 ist ausgangsseitig an den Eingang des Mitteldruckteils 4b der Dampfturbine 4 angeschlossen. Die Mitteldruck-Trommel 52 und die Verdampfer-Heizfläche 56 sowie die beiden Zwischenüberhitzer-Heizflächen 57 und 58 bilden zusammen mit dem Mitteldruckteil 4b der Dampfturbine 4 eine Mitteldruckstufe des Wasser-Dampf-Kreislaufs 8.

Der zweite Hochdruckvorwärmer 48 ist ausgansseitig über eine Verbindungsleitung 60 mit einer Hochdruck-Trommel 62 verbunden, an die über eine Umwälzpumpe 64 eine Verdampfer-Heizfläche 66 angeschlossen ist. Die Hochdruck-Trommel 62 ist dampfseitig über eine Überhitzer-Heizfläche 68 an den Eingang des Hochdruckteils 4a der Dampfturbine 4 angeschlossen. Die Hochdruckvorwärmer 44, 48 und die Hochdruck-Trommel 62 sowie die Verdampfer-Heizfläche 66 und die Überhitzer-Heizfläche 68 bilden zusammen mit dem Hochdruckteil 4a der Dampfturbine 4 eine Hochdruckstufe des Wasser-Dampf-Kreislauf 8.

In die Überströmleitung 38 zwischen dem Mitteldruckteil 4b und dem Niederdruckteil 4c der Dampfturbine 4 ist die Sekundärseite eines Wärmetauschers 70 geschaltet. Primärseitig ist der Wärmetauscher 70 eingangsseitig mit einem Ausgang 72 des Hochdruckteils 4b der Dampfturbine 4 verbunden. Der primärseitige Ausgang 74 des Wärmetauschers 70 ist über eine Dampfleitung 76 mit dem Eingang der Zwischenüberhitzer-Heizfläche 57 der Mitteldruckstufe verbunden.

Beim Betrieb der Gas- und Dampfturbinenanlage wird dem Kondensatvorwärmer 12 über die Pumpe 14 und die Kondensatleitung 10 Kondensat K aus dem Kondensator 16 zugeführt. Dabei kann der Kondensatvorwärmer 12 ganz oder teilweise umführt werden. Das Kondensat K wird in dem Kondensatvorwärmer 12 aufgewärmt und dazu mindestens teilweise über die Umwälzpumpe 18 umgewälzt. Das aufgewärmte Kondensat K wird über die Leitung 20 in den Speisewasserbehälter 22 geführt. Dort erfolgen in nicht näher dargestellter Art und Weise eine Aufwärmung des Speisewasser mittels Anzapfdampf aus der Dampfturbine 4 oder aus der Niederdruckdampfleitung 36 sowie zweckmäßigerweise eine Entgasung des Kondensats K. Das aufgewärmte Speisewasser S wird einerseits der Niederdruck-Trommel 28 und andererseits über den ersten Hochdruckvorwärmer 44 der Mitteldruck-Trommel 52 sowie über den zweiten Hochdruckvorwärmer 48 der Hochdruck-Trommel 62 zugeführt. Das der Niederdruckstufe zugeführte Speisewasser S wird in der Verdampfer-Heizfläche 32 bei niedrigem Druck verdampft, wobei der in der Niederdruck-Trommel 28 abgetrennte Niederdruckdampf ND der Überhitzer-Heizfläche 34 zugeführt wird. Der dort überhitzte Niederdruckdampf ND wird hinter dem Wärmetauscher 70, d. h. auf dessen sekundärseitigen Abströmseite, in die Überströmleitung 38 geführt.
Ebenso wird das in die Mitteldruck-Trommel 52 geführte Speisewasser S in der Verdampfer-Heizfläche 56 verdampft. In der Mitteldruck-Trommel 52 abgetrennter und unter mittlerem Druck stehender Dampf wird als Mitteldruckdampf MD über die Zwischenüberhitzer-Heizfläche 57 und die Zwischenüberhitzer-Heizfläche 58 geführt. Dabei wird dem in der Mitteldruck-Trommel 52 abgetrennten Mitteldruckdampf MD vor der Zwischenüberhitzer-Heizfläche 57 Mitteldruckdampf MD aus dem Wärmetauscher 70 zugemischt. Der somit in zwei Stufen überhitzte Mitteldruckdampf MD wird dem Mitteldruckteil 4b der Dampfturbine 4 zugeführt.

Analog wird das im zweiten Hochdruckvorwärmer 48 vorgewärmte Speisewasser S in der Verdampfer-Heizfläche 66 unter hohem Druck verdampft. Dabei wird der in der Hochdruck-Trommel 64 abgetrennte Hochdruckdampf HD in der Überhitzer-Heizfläche 68 überhitzt und in überhitztem Zustand in den Hochdruckteil 4a der Dampfturbine 4 geführt. Der im Hochdruckteil 4a entspannte Dampf wird als Mitteldruckdampf MD über die Primärseite des Wärmetauschers 70 geführt und anschließend zusammen mit dem Mitteldruckdampf MD aus der Mitteldruck-Trommel 52 in überhitztem Zustand dem Mitteldruckteil 4b der Dampfturbine 4 zugeführt.

Der im Mitteldruckteil 4b der Dampfturbine 4 entspannte und unter niedrigem Druck stehende Dampf wird als Niederdruckdampf ND über die Überströmleitung 38 geführt und im Wärmetauscher 70 durch indirekten Wärmetausch mit dem aus dem Hochdruckteil 4a ausströmenden Mitteldruckdampf MD überhitzt. Dabei weist der Mitteldruckdampf MD in Abhängigkeit vom Druck und von der Temperatur des Frisch- oder Hochdruckdampfes HD sowie in Abhängigkeit vom Expansionsverlauf im Hochdruckteil 4a eine Temperatur Tₚ von etwa 350 bis 400° C auf. Der Niederdruckdampf ND aus dem Mitteldruckteil 4b verläßt die Dampfturbine 4 in Abhängigkeit vom gewählten Druck mit einer Temperatur Tₛ von etwa 200 bis 250° C. Somit wird im Wärmetauscher 70 eine Aufheizung des Niederdruckdampfes ND um etwa 100° C erzielt. Der so aufgeheizte Niederdruckdampf ND mit einer Temperatur T von etwa 300 bis 350° C wird zusammen mit dem aus der Niederdruck-Trommel 28 abströmenden Niederdruckdampf ND dem Niederdruckteil 4c der Dampfturbine 4 zugeführt. Der dort entspannte Niederdruckdampf ND wird zur Kondensation dem Kondensator 16 zugeführt.

Durch die Einschaltung des Wärmetauschers 70 zwischen den Mitteldruckteil 4b und den Niederdruckteil 4c der Dampfturbine 4 zur Überhitzung des dem Niederdruckteil 4c zuströmenden Niederdruckdampfes ND mittels des aus dem Hochdruckteil 4a der Dampfturbine 4 ausströmenden Mitteldruckdampfes MD wird ein besonders hoher Gesamtwirkungsgrad der Anlage erzielt, der sich in einer an einem Dampfturbinen-Generator 76 entnehmbaren hohen Klemmleistung niederschlägt. Dabei kann der Niederdruckdampf ND aus der Niederdruck-Trommel 28 dem Niederdruckdampf ND aus dem Mitteldruckteil 4b in nicht näher dargestellter Weise auch vor dem Wärmetauscher 70 zugemischt werden, wobei dann das Gemisch, d.h. der gesamte erzeugte Niederdruckdampf ND, im Wärmetauscher 70 aufgeheizt wird.

## Patentansprüche

1. Gas- und Dampfturbinenanlage mit einem der Gasturbine (2) abgasseitig nachgeschalteten Abhitzedampferzeuger (6), dessen Heizflächen in den Wasser-Dampf-Kreislauf (8) der Dampfturbine (4) geschaltet sind, die einen Hochdruckteil (4a) und einen Mitteldruckteil (4b) sowie einen Niederdruckteil (4c) aufweist, wobei ein außerhalb des Abhitzedampferzeugers (6) angeordneter Wärmetauscher (70) vorgesehen ist,
**dadurch gekennzeichnet, dass** dieser primärseitig zwischen den Hochdruckteil (4a) und den Mitteldruckteil (4b) der Dampfturbine (4) geschaltet ist, und der sekundärseitig zwischen den Mitteldruckteil (4b) und den Niederdruckteil (4c) der Dampfturbine (4) geschaltet ist.

2. Anlage nach Anspruch 1,
**dadurch gekennzeichnet, daß** der Wärmetauscher (70) primärseitig über mindestens eine dem Hochdruckteil (4a) nachgeschaltete Zwischenüberhitzer-Heizfläche (57, 58) an den Eingang des Mitteldruckteils (4b) angeschlossen ist.

3. Anlage nach Anspruch 1 oder 2,
**dadurch gekennzeichnet, daß** eine im Abhitzedampferzeuger (6) angeordnete Verdampfer-Heizfläche (56) ausgangsseitig mit dem primärseitigen Ausgang (74) des Wärmetauschers (70) verbunden ist.

4. Anlage nach einem der Ansprüche 1 bis 3,
**dadurch gekennzeichnet, daß** der Wasser-Dampf-Kreislauf (8)aus drei Druckstufen aufgebaut ist, wobei jede Druckstufe eine Verdampfer-Heizfläche(32, 56, 66) und mindestens eine Überhitzer-Heizfläche (34, 57, 68) aufweist, wobei zwischen den Hochdruckteil (4a) und den Mitteldruckteil (4b) der Dampfturbine (4) mindestens eine Zwischenüberhitzer-Heizfläche (58) geschaltet ist.

5. Verfahren zum Betreiben einer Gas- und Dampfturbinenanlage mmit den Merkmalen nach einem der Ansprüche 1 bis 4, bei dem im entspannten Arbeitsmittel (AG) aus der Gasturbine (2) enthaltene Wärme zur Erzeugung von Dampf (HD, MD, ND) für die in einen aus drei Druckstufen aufgebauten Wasser-Dampf-Kreislauf (8) geschaltete Dampfturbine (4) genutzt wird, wobei im Wasser-Dampf-Kreislauf (8) strömendes Speisewasser (S) in im Abhitzedampferzeuger (6) angeordneten Heizflächen (34, 56, 57, 58, 66, 68) verdampft und überhitzt wird,
**dadurch gekennzeichnet, daß** der dem Niederdruckteil (4c) der Dampfturbine (4) zuströmende Niederdruckdampf (ND) durch indirekten Wärmetausch mit aus dem Hochdruckteil (4a) der Dampfturbine (4) abströmendem Mitteldruckdampf(MD) aufgeheizt wird.

6. Verfahren nach Anspruch 5,
**dadurch gekennzeichnet, daß** der beim indirekten Wärmetausch abgekühlte Mitteldruckdampf (MD) im Abhitzedampferzeuger (6) überhitzt und anschließend der Dampfturbine (4) zugeführt wird.

7. Verfahren nach Anspruch 6,
**dadurch gekennzeichnet, daß** im Abhitzedampferzeuger (6) erzeugter Mitteldruckdampf (MD) zusammen mit dem abgekühlten Mitteldruckdampf (MD) im Abhitzedampferzeuger (6) überhitzt wird.

8. Verfahren nach einem der Ansprüche 5 bis 7,
**dadurch gekennzeichnet, daß** im Abhitzedampferzeuger (6) erzeugter Niederdruckdampf (ND) dem durch indirekten Wärmetausch aufgeheizten Niederdruckdampf (ND) zugemischt wird.

## Claims

1. Gas and steam turbine plant, with a waste-heat steam generator (6) which follows the gas turbine (2) on the exhaust-gas side and the heating surfaces of which are connected into the water/steam circuit (8) of the steam turbine (4) which has a high-pressure part (4a) and a medium-pressure part (4b) and also a low-pressure part (4c), a heat exchanger (70) arranged outside the waste-heat steam generator (6) being provided, **characterized in that** the said heat exchanger is connected on the primary side between the high-pressure part (4a) and the medium-pressure part (4b) of the steam turbine (4) and is connected on the secondary side between the medium-pressure part (4b) and the low-pressure part (4c) of the steam turbine (4).

2. Plant according to Claim 1, **characterized in that** the heat exchanger (70) is connected to the inlet of the medium-pressure part (4b) on the primary side via at least one intermediate superheater heating surface (57, 58) following the high-pressure part (4a).

3. Plant according to Claim 1 or 2, **characterized in that** an evaporator heating surface (56) arranged in the waste-heat steam generator (6) is connected on the outlet side to the primary-side outlet (74) of the heat exchanger (70).

4. Plant according to one of Claims 1 to 3, **characterized in that** the water/steam circuit (8) is composed of three pressure stages, each pressure stage having an evaporator heating surface (32, 56, 66) and at least one superheater heating surface (34, 57, 68), at least one intermediate superheater heating surface (58) being connected between the high-pressure part (4a) and the medium-pressure part (4b) of the steam turbine (4).

5. Method for operating a gas and steam turbine plant having the features according to one of Claims 1 to 4, in which heat contained in the expanded working medium (AG) from the gas turbine (2) is utilized for generation of steam (HD, MD, ND) for the steam turbine (4) connected into a water/steam circuit (8) composed of three pressure stages, feed water (S) which flows in the water/steam circuit (8) being evaporated and superheated in heating surfaces (34, 56, 57, 58, 66, 68) arranged in the waste-heat steam generator (6), **characterized in that** the low-pressure steam (ND) flowing to the low-pressure part (4c) of the steam turbine (4) is heated by indirect heat exchange with medium-pressure steam (MD) flowing out of the high-pressure part (4a) of the steam turbine (4).

6. Method according to Claim 5, **characterized in that** the medium-pressure steam (MD) cooled during indirect heat exchange is superheated in the waste-heat steam generator (6) and is subsequently supplied to the steam turbine (4).

7. Method according to Claim 6, **characterized in that** medium-pressure steam (MD) generated in the waste-heat steam generator (6) is superheated, together with the cooled medium-pressure steam (MD), in the waste-heat steam generator (6).

8. Method according to one of Claims 5 to 7, **characterized in that** low-pressure steam (ND) generated in the waste-heat steam generator (6) is admixed with the low-pressure steam (ND) heated by indirect heat exchange.

## Revendications

1. Installation à turbine à gaz et à turbine à vapeur, comprenant un générateur (6) de vapeur à récupération de la chaleur perdue, qui est monté en aval du côté des gaz d'échappement de la turbine (2) à gaz et dont les surfaces de chauffe sont montées dans le circuit (8) eau-vapeur de la turbine (4) à vapeur, laquelle comprend une partie (4a) haute pression et une partie (4b) moyenne pression, ainsi qu'une partie (4c) basse pression, un échangeur de chaleur (70) étant monté à l'extérieur du générateur (6) de vapeur par récupération de chaleur perdue,
**caractérisée en ce que** celui-ci est monté du côté primaire entre la partie (4a) haute pression et la partie (4b) moyenne pression de la turbine (4) à vapeur et est monté du côté secondaire entre la partie (4b) moyenne pression et la partie (4c) basse pression de la turbine (4) à vapeur.

2. Installation suivant la revendication 1,
**caractérisée en ce que** l'échangeur de chaleur (70) est raccordé du côté primaire à l'entrée de la partie (4b) moyenne pression par au moins une surface (57, 58) de chauffe d'un surchauffeur intermédiaire monté en aval de la partie (4a) haute pression.

3. Installation suivant la revendication 1 ou 2,
**caractérisée en ce qu'**une surface (56) de chauffe à évaporateur montée dans le générateur (6) de vapeur par récupération de chaleur perdue est reliée du côté de la sortie à la sortie (74) du côté primaire de l'échangeur de chaleur (70).

4. Installation suivant l'une des revendications 1 à 3,
**caractérisée en ce que** le circuit (8) eau-vapeur est constitué de trois étages de pression, chaque étage de pression comprenant une surface de chauffe (32, 56, 66) à évaporateur et au moins une surface de chauffe (34, 57, 68) à surchauffeur, au moins une surface de chauffe (58) de surchauffeur intermédiaire étant montée entre la partie (4a) haute pression et la partie (4b) moyenne pression de la turbine (4) à vapeur.

5. Procédé pour faire fonctionner une installation à turbine à gaz et à turbine à vapeur ayant les caractéristiques de l'une des revendications 1 à 4, dans lequel on utilise la chaleur contenue dans le fluide (AG) de travail détendu sortant de la turbine (2) à gaz pour produire de la vapeur (HD, MD, ND) pour la turbine (4) à vapeur montée dans un circuit (8) eau-vapeur constitué de trois étages de pression, l'eau (S) d'alimentation passant dans le circuit (8) eau-vapeur étant évaporée et surchauffée dans des surfaces (34, 56, 57, 58, 66, 68) de chauffe disposées dans le générateur (6) de vapeur par récupération de chaleur perdue,
**caractérisé en ce que** l'on chauffe la vapeur (ND) basse pression affluant dans la partie (4c) basse pression de la turbine (4) à vapeur par échange de chaleur indirect avec de la vapeur (MD) moyenne pression sortant de la partie (4a) haute pression de la turbine (4) vapeur.

6. Procédé suivant la revendication 5,
**caractérisé en ce que** l'on surchauffe dans le générateur (6) de vapeur par récupération de chaleur perdue la vapeur (MD) moyenne pression refroidie par échange de chaleur indirect et on l'envoie ensuite à la turbine (4) à vapeur.

7. Procédé suivant la revendication 6,
**caractérisé en ce que** l'on surchauffe dans le générateur (6) de vapeur par récupération de chaleur perdue de la vapeur (MD) moyenne pression produite dans le générateur (6) de vapeur par récupération de chaleur perdue ensemble avec la vapeur (MD) moyenne pression refroidie.

8. Procédé suivant l'une des revendications 5 à 7,
**caractérisé en ce que** l'on ajoute de la vapeur (ND) basse pression produite dans le générateur (6) de vapeur par récupération de chaleur perdue à la vapeur (ND) basse pression chauffée par échange de chaleur indirect.
